# DEMANDE DE BREVET EUROPEEN

(11) **EP 1 764 740 A1**
(43) Date de publication de la demande: **21.03.2007**
(21) Numéro de dépôt: 06119837.0
(22) Date de dépôt: 30.08.2006
(51) Int. Cl.: G06T 5/30, G06K 9/00, G07C 9/00

(54) **Traitement numérique d'une image d'iris**

(30) Priorité: 31.08.2005 FR 0552617
(71) Demandeur: STMICROELECTRONICS SA, 92120 Montrouge (FR)
(72) Inventeur: Martin, Lionel Résidence Les Muguets, 13090 Aix en Provence (FR); Petitjean, Guillaume Résidence Valbonnette A3, 13100 Aix en Provence (FR); Ketchantang, William Résidence Alice Chatenoud, 13388 Marseille Cedex 13 (FR)
(74) Mandataire: de Beaumont, Michel

(57) **Abrégé**

L'invention concerne un procédé et système de traitement numérique d'une image d'iris d'oeil ou analogue, comportant au moins une première étape de filtrage (521) correspondant à une fermeture morphologique par un premier élément structurant correspondant à un disque dont le rayon en nombre de pixels correspond approximativement à l'épaisseur d'un cil dans l'image, et une deuxième étape de filtrage (522) correspondant à une ouverture morphologique de l'image résultant de l'étape précédente par un deuxième élément structurant correspondant à un disque dont le rayon en nombre de pixels est compris entre deux et cinq fois celui du disque de la première étape.

## Description

### Domaine de l'invention

La présente invention concerne, de façon générale, le domaine du traitement d'images numériques et, plus particulièrement, les traitements appliqués à des images numériques de l'oeil dans des applications d'identification ou d'authentification.

### Exposé de l'art antérieur

La reconnaissance d'iris constitue une technique d'identification biométrique éprouvée, pourvu que l'image sur laquelle sont appliqués les procédés d'analyse et d'identification soit une image exploitable. En particulier, la performance des algorithmes de reconnaissance dépend fortement de la netteté de l'image de l'iris à identifier.

Or, dans la plupart des applications, et notamment dans les applications dites "embarquées" (par exemple, pour du contrôle d'accès à un téléphone ou ordinateur portable, pour une clé électronique, etc.), la caméra (capteur numérique et lentille) utilisée ne dispose pas de système d'autofocus ajustant la focale (réelle ou simulée) en fonction de la distance.

De plus, pour obtenir une résolution suffisante de l'iris avec des optiques sans focale spécifique, les images sont prises à une distance relativement faible (généralement de l'ordre de 10 à 30 cm). Il en découle une faible profondeur de champ (plage de distance entre la caméra et l'oeil dans laquelle l'image est nette). Cette faible profondeur de champ ajoutée au fait que l'oeil est sphérique peut engendrer des différences de netteté dans les zones d'une même image de l'oeil.

Un traitement préalable à la reconnaissance d'iris proprement dite est donc souvent mis en oeuvre pour sélectionner une image suffisamment nette. Généralement, le dispositif de prise de vues prend un nombre d'images compris entre 5 et 50 et le système de prétraitement sélectionne une ou plusieurs images à soumettre à l'algorithme de reconnaissance proprement dit.

Un exemple de procédé d'évaluation de la netteté d'une image d'iris d'oeil pour reconnaissance ultérieure est décrit dans le document US-A-2004/0101170.

Cependant, lorsque les images sont de mauvaise qualité (images défocalisées, images floues dues aux mouvements de l'oeil, à la qualité du système optique, présence de cils dans l'iris, apparition de taches blanches dans la pupille dues aux réflexions d'une source lumineuse, etc.), le procédé de sélection des images les plus nettes sélectionne quand même des images insuffisantes pour une reconnaissance acceptable, et en particulier pour une localisation.

### Résumé de l'invention

La présente invention vise à pallier tout ou partie des inconvénients des techniques connues de prétraitement d'images numériques pour reconnaissance d'iris.

L'invention vise plus particulièrement à proposer un prétraitement numérique d'une image d'iris afin d'améliorer la localisation d'iris, notamment pour qu'un algorithme d'identification aval soit moins sensible à des différences entre les qualités d'origine des images.

L'invention vise également à proposer une solution compatible avec les systèmes embarqués notamment en termes de ressources de calcul utilisées.

Pour atteindre tout ou partie de ces objets ainsi que d'autres, la présente invention prévoit un procédé de traitement numérique d'une image d'iris d'oeil ou analogue, comportant au moins :
une première étape de filtrage correspondant à une fermeture morphologique par un premier élément structurant correspondant à un disque dont le rayon en nombre de pixels correspond approximativement à l'épaisseur d'un cil dans l'image ; et
une deuxième étape de filtrage correspondant à une ouverture morphologique de l'image résultant de l'étape précédente par un deuxième élément structurant correspondant à un disque dont le rayon en nombre de pixels est compris entre deux et cinq fois celui du disque de la première étape.

Selon un mode de mise en oeuvre de la présente invention, les première et deuxième étapes sont suivies :
d'une troisième étape de filtrage correspondant à une ouverture morphologique de l'image résultant de la deuxième étape par un troisième élément structurant correspondant à un disque dont le rayon correspond à la taille minimale attendue de la pupille dans l'iris ; et
d'une quatrième étape de filtrage correspondant à une fermeture morphologique par le troisième élément structurant.

Selon un mode de mise en oeuvre de la présente invention, l'ordre des troisième et quatrième étapes est inversé.

Selon un mode de mise en oeuvre de la présente invention, une cinquième étape consiste à appliquer un algorithme de rehaussement du contraste, de préférence par un filtrage d'étirement linéaire par morceau.

Selon un mode de mise en oeuvre de la présente invention, l'image résultante est fournie à un opérateur de localisation de l'iris.

L'invention prévoit également un procédé de reconnaissance d'iris d'oeil.

L'invention prévoit également un système de reconnaissance d'iris d'oeil.

### Brève description des dessins

Ces objets, caractéristiques et avantages, ainsi que d'autres de la présente invention seront exposés en détail dans la description suivante de modes de mise en oeuvre et de réalisation particuliers faite à titre non limitatif en relation avec les figures jointes parmi lesquelles :
la figure 1 représente, de façon très schématique et sous forme de blocs, un mode de réalisation d'un système de reconnaissance d'iris mettant en oeuvre le procédé de prétraitement de l'invention ;
la figure 2 illustre, de façon très schématique et sous forme de blocs, un mode de mise en oeuvre du procédé de prétraitement selon l'invention ;
la figure 3 illustre un mode en oeuvre d'une étape de filtrage morphologique du procédé de la figure 2 ;
les figures 4A à 4C, 5A à 5C et 6A à 6C illustrent des résultats expérimentaux obtenus par la mise en oeuvre du procédé de la figure 3.

Par souci de clarté, seules les étapes qui sont utiles à la compréhension de l'invention ont été représentées aux figures et seront décrites par la suite. En particulier, les étapes de localisation et de reconnaissance d'iris proprement dites exploitant le prétraitement de l'invention n'ont pas été détaillées, l'invention étant compatible avec toute exploitation aval des images prétraitées. De même, le mode d'obtention des images à traiter par l'invention n'a pas été détaillé, l'invention étant là encore compatible avec n'importe quelle image numérique d'oeil obtenue en niveau de gris.

### Description détaillée

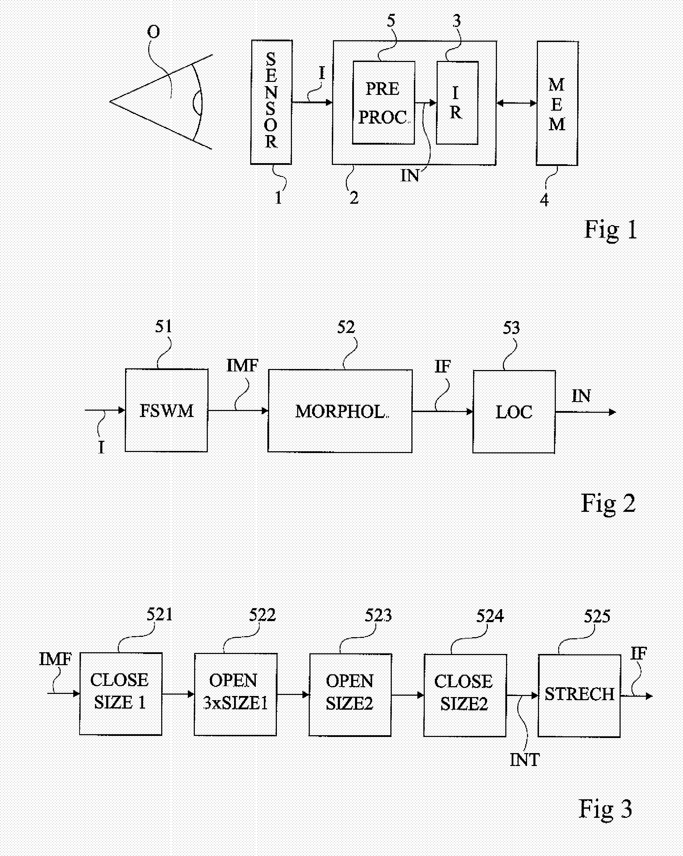

La figure 1 représente, de façon très schématique et sous forme de blocs, un mode de réalisation d'un système de reconnaissance d'iris mettant en oeuvre le procédé de l'invention.

Un tel système est destiné à exploiter des images d'oeil pour effectuer une identification ou authentification par reconnaissance iridienne. Par exemple, un capteur numérique 1 (SENSOR) acquiert une séquence video d'un oeil O d'un sujet. Le nombre d'images I sauvegardées est de préférence d'au moins une dizaine afin de minimiser le risque de devoir demander au sujet de se soumettre à une nouvelle série de prise de vues. En variante, les images à analyser proviennent d'une source distante et sont, le cas échéant, préenregistrées.

Le capteur 1 est relié à une unité centrale 2 de traitement dont le rôle est, notamment, de mettre en oeuvre la reconnaissance d'iris (bloc 3, IR) proprement dite après avoir sélectionné, parmi un ensemble d'images stockées dans une mémoire 4 (MEM), l'image IN la plus nette (ou les images les plus nettes).

La figure 2 illustre, par des blocs, un mode de mise en oeuvre d'une phase 5 de prétraitement selon la présente invention. Dans cet exemple, chaque image I est soumise à un opérateur 51 (FSWM) connu sous la dénomination d'opérateur "médian pondéré sélectif en fréquence" ou "Frequency Selective Weighted Median". Cet opérateur est optionnel et sert dans cet exemple à sélectionner les meilleures images de la séquence vidéo prise par le capteur 1 (figure 1). Un tel opérateur FSWM pourra être remplacé par tout autre traitement adapté, voire être omis, notamment si le traitement de l'invention est appliqué à des images préenregistrées.

Les images IMF (ou les images I en l'absence d'opérateur 51) sont traitées par une étape 52 (MORPHOL) de filtrage dit morphologique et de rehaussement de contraste qui sera détaillé ultérieurement en relation avec la figure 3.

Un filtrage morphologique revient à filtrer une image en niveaux de gris, non pas en appliquant des opérations de convolution mais en fonction de la taille et de la forme des détails de l'image (en pratique en appliquant des opérations de détermination de valeurs maximale et minimale dans un voisinage particulier de chaque pixel). Un filtrage morphologique est particulièrement adapté quand on s'intéresse aux formes (ici, les contours de l'iris et de la pupille). On utilise comme référence un élément dit structurant (en général, un rond, un carré ou un hexagone). Selon que l'on recherche les valeurs maximales ou minimales, on parle d'érosion ou de dilatation. Par exemple, une érosion élimine des taches claires sur un fond sombre si ces taches ont une taille inférieure à celle de l'élément structurant. A l'inverse, une tache sombre (de taille inférieure à celle de l'élément structurant) sur un fond clair sera comblée par une dilatation. Pour respecter les formes générales de l'image, les opérations d'érosion et de dilatation sont généralement combinées. On parle d'ouverture pour désigner une érosion suivie d'une dilatation avec le même élément structurant et de fermeture pour désigner une dilatation suivie d'une érosion avec le même élément structurant. Une fermeture supprime les détails sombres de petite taille par rapport à celle de l'élément structurant. Une ouverture supprime les détails clairs de petite taille par rapport à celle de l'élément structurant.

Des exemples de filtres morphologiques sont décrits dans :
"Statistical Evaluation of Sequential Morphological Operations" de Motaz A Mohamed et Jafar Saniie, IEEE Transactions on Signal Processing, vol. 43, n°7, juillet 1995 ;
"Filtrage Morphologique" de J. Serra, Ecole des Mines de Paris, 2000. ;
"Algorithms for the Decomposition of Gray-Scale Morphological Operations", de R. Jones et I. Svalbe, IEEE Transaction on Pattern Analysis and Machine Intelligence, 1994 ; et
"Morphologie Mathématique et analyse d'images" de C. Vachier, Université Paris 12, 2002.

Dans l'exemple de la figure 2, les images IF issues de l'étape 52 sont soumises à une étape 53 (LOC) de localisation de l'iris. On pourra s'inspirer, par exemple, des étapes de localisation des procédés décrits dans les documents US-A-2004/0101169 (02-RO-406) et US-A-2004/0101170 (02-RO-308).

Les images IF résultant du bloc 52 sont soumises à une étape 53 de sélection de l'image la plus nette dans un ensemble d'images puis de localisation de l'iris dans cette image.

La figure 3 représente un mode de mise en oeuvre préféré de la phase de filtrage 52 de la figure 2. L'image IMF issue du filtre 51 est soumise à, de préférence, cinq étapes 521 à 525. Les quatre premières étapes sont des étapes d'ouverture ou de fermeture morphologique.

Le choix des éléments structurants utilisés pour les filtrages d'ouverture et de fermeture conditionne bien entendu les résultats obtenus. L'élément structurant correspond, par exemple, à une tache blanche dans une image, la taille attendue de l'iris, d'un cil, etc.

Selon le mode de réalisation préféré de l'invention, une première étape 521 (CLOSE SIZE1) consiste à effectuer une fermeture par filtrage de l'image IMF avec un élément structurant correspondant à un disque de diamètre correspondant approximativement à l'épaisseur d'un cil. Selon un exemple particulier d'une image de 640 par 480 pixels, l'élément structurant est choisi d'un rayon de 5 pixels. L'étape 521 étant une fermeture, les cils se trouvent éliminés car ils sont relativement sombres.

Une deuxième étape 522 (OPEN 3*SIZE1) consiste à effectuer une ouverture d'une taille comprise entre deux et cinq fois la taille (première taille) de l'élément de l'étape 521, de préférence, approximativement le triple de cette première taille. Cette taille correspond en fait à celle des taches blanches dans l'image. En reprenant l'exemple précédent, on choisit un rayon de 15 pixels pour l'élément structurant de l'ouverture 522. Cette première ouverture élimine partiellement les taches blanches.

De préférence, les deux première étapes sont suivies de deux autres étapes d'ouverture et de fermeture (ou inversement). Dans l'exemple représenté, une troisième étape 523 est une ouverture (OPEN SIZE2) d'un d'élément structurant correspondant à un disque dont le rayon correspond au rayon minimal attendu de la pupille dans l'image. Par exemple, la taille SIZE2 est de l'ordre de 30 pixels dans les images considérées. Cette deuxième ouverture optionnelle supprime entièrement les taches blanches et homogénéise la zone pupille.

Une quatrième étape 524 consiste en une fermeture (CLOSE SIZE2) de même taille d'élément structurant que l'étape 523 afin d'homogénéiser la zone iris de l'image qui comporte quelques zones sombres générées par l'étape précédente. L'image INT issue de l'étape 524 est une image dans laquelle les taches blanches présentes dans les images originales ont été supprimées de même que les cils qui couvrent une partie de l'iris.

Toutefois, le contraste risque d'être atténué. Par conséquent, dans un mode de réalisation préféré, une cinquième étape 525 (STRECH) rehausse le contraste de l'image issue de l'étape précédente pour fournir l'image IF.

Différents algorithmes de rehaussement de contraste pourront être utilisés. Selon un exemple préféré, l'invention prévoit de mettre en oeuvre un rehaussement de contraste consistant en un étirement linéaire par morceau. Cela revient à recaler l'histogramme des niveaux de gris de l'image dans un intervalle borné, défini par les valeurs minimale et maximale d'intensité souhaitées dans l'image finale. On obtient ainsi une distribution d'intensités sur les différentes régions présentes dans l'image presque identique d'une image à une autre, quelle que soit la luminosité de l'image originale.

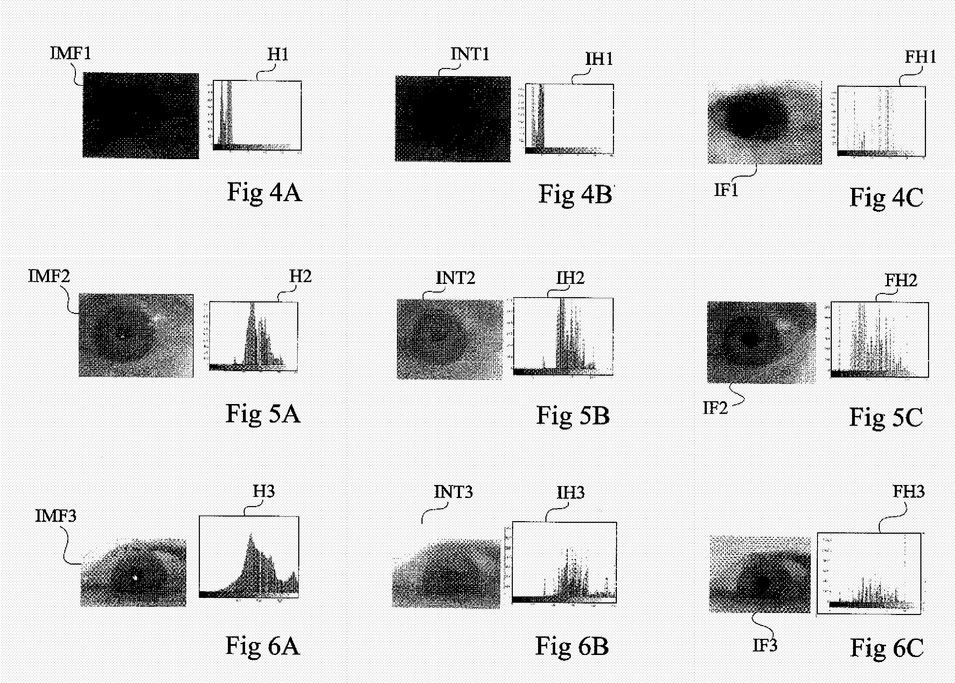

Les figures 4A à 4C, 5A à 5C, 6A à 6C illustrent des résultats expérimentaux obtenus par la mise en oeuvre du procédé de la figure 3 sur trois images d'oeil.

Les figures 4A, 5A et 6A représentent les images d'origine IMF1, IMF2 et IMF3, respectivement considérées arbitrairement sombre, correcte (avec une légère tache blanche) et polluée par des cils et taches blanches, avec leurs histogrammes respectifs H1, H2 et H3 d'intensités de niveaux de gris. Les échelles des niveaux de gris prises pour exemple sont arbitraires mais identiques pour tous les histogrammes afin d'en permettre la comparaison.

Les figures 4B, 5B et 6B représentent les images respectives INT1, INT2 et INT3 obtenues en sortie de la deuxième fermeture morphologique 524 et leurs histogrammes de niveaux de gris associés IH1, IH2 et IH3.

Les figures 4C, 5C et 6C représentent les images respectives IF1, IF2 et IF3 traitées et contrastées, obtenues en sortie de l'étape 525 et leurs histogrammes de niveaux de gris associés FH1, FH2 et FH3.

Comme le montrent ces figures, l'étape de rehaussement du contraste par étirement linéaire améliore le contraste entre les régions de pupille et d'iris et entre les régions d'iris et de cornée. Le résultat est surtout frappant pour l'image sombre (figures 4A à 4C). Les étapes de filtrage morphologique éliminent les cils (fondent les cils dans l'image) et les taches blanches.

Un avantage de la présente invention est qu'elle crée des régions homogènes et contrastées dans l'image, d'où une meilleure efficacité du module de localisation d'iris.

Un autre avantage de l'invention est que les étapes de filtrage morphologique et d'étirement linéaire d'histogrammes sont compatibles avec les ressources de calcul des applications "embarquées" et avec la rapidité requise pour des reconnaissances iridiennes en temps réel.

Bien entendu, la présente invention est susceptible de diverses variantes et modifications qui apparaîtront à l'homme de l'art. En particulier, la mise en oeuvre de l'invention par des outils matériels et/ou logiciels est à la portée de l'homme du métier à partir des indications fonctionnelles données ci-dessus. De même, les tailles des éléments structurants des filtres morphologiques de l'invention pourront être modifiées en fonction de la taille des cils, des taches blanches et de la pupille dans les images.

## Revendications

1. Procédé de traitement numérique d'une image (I) d'iris d'oeil ou analogue, comportant au moins :
une première étape de filtrage (521) correspondant à une fermeture morphologique par un premier élément structurant correspondant à un disque dont le rayon en nombre de pixels correspond approximativement à l'épaisseur d'un cil dans l'image ; et
une deuxième étape de filtrage (522) correspondant à une ouverture morphologique de l'image résultant de l'étape précédente par un deuxième élément structurant correspondant à un disque dont le rayon en nombre de pixels est compris entre deux et cinq fois celui du disque de la première étape.

2. Procédé selon la revendication 1, dans lequel les première et deuxième étapes sont suivies :
d'une troisième étape de filtrage (523) correspondant à une ouverture morphologique de l'image résultant de la deuxième étape par un troisième élément structurant correspondant à un disque dont le rayon correspond à la taille minimale attendue de la pupille dans l'iris ; et
d'une quatrième étape de filtrage (524) correspondant à une fermeture morphologique par le troisième élément structurant.

3. Procédé selon la revendication 2, dans lequel l'ordre des troisième et quatrième étapes est inversé.

4. Procédé selon l'une quelconque des revendications 2 et 3, dans lequel une cinquième étape (525) consiste à appliquer un algorithme de rehaussement du contraste, de préférence par un filtrage d'étirement linéaire par morceau.

5. Procédé selon l'une quelconque des revendications 1 à 4, dans lequel l'image résultante (IF) est fournie à un opérateur (53) de localisation de l'iris.

6. Procédé de reconnaissance d'iris d'oeil, **caractérisé en ce qu'**il met en oeuvre un prétraitement correspondant au procédé selon l'une quelconque des revendications 1 à 5.

7. Système de reconnaissance d'iris d'oeil comprenant des moyens pour la mise en oeuvre du procédé selon la revendication 6.
